# EUROPEAN PATENT SPECIFICATION

(11) **EP 3 398 915 B1**
(45) Date of publication and mention of the grant of the patent: **16.06.2021**
(21) Application number: 16881536.3
(22) Date of filing: 04.11.2016
(51) Int. Cl.: C03C 25/10, C03C 13/02, C03C 25/326, C03C 25/1025, C03B 37/022, D06M 15/333, D06M 15/568, D06M 101/00, C04B 14/42

(54) **GLASS STRAND, GLASS ROVING, AND METHOD FOR MANUFACTURING SAME**
GLASSTRANG, GLASROVING UND VERFAHREN ZUR HERSTELLUNG DAVON
FIL DE VERRE, STRATIFIL DE VERRE ET PROCÉDÉ POUR SA FABRICATION

(30) Priority: 28.12.2015 JP 2015256256
(43) Date of publication of application: 07.11.2018
(73) Proprietor: Nippon Electric Glass Co., Ltd., Otsu-shi, Shiga 520-8639 (JP)
(72) Inventor: NISHIBORI, Shinji, Otsu-shi Shiga 520-8639 (JP); ABE, Jiro, Otsu-shi Shiga 520-8639 (JP)
(74) Representative: Tetzner, Michael
(86) International application number: PCT/JP2016/082736
(87) International publication number: WO 2017/115556

(56) References cited:
- JP-A- 2002 053 346
- JP-A- 2002 506 414
- JP-A- 2006 327 860
- JP-A- 2007 269 506
- JP-A- 2014 534 147

## Description

### Technical Field

The present invention relates to glass strands, glass rovings, and methods for manufacturing the glass rovings.

### Background Art

Glass strands are widely used as a reinforcement material for GRC (glass-fiber reinforced concrete) and known as an effective measure for making up for the brittleness of cement and improving the tensile strength, flexural strength, and impact strength of cement.

There is known, as a method for manufacturing GRC, for example, a method of manufacturing GRC by mixing glass chopped strands, which have been obtained by chopping a glass strand, into mortar made of cement, an aggregate, water, an admixture, and others which are previously mixed together, and then molding the mortar into a predetermined shape.

A glass strand can be obtained by applying, using an applicator, a sizing agent to glass filaments obtained by extruding molten glass from a bushing having several hundreds to several thousands of nozzles, and then integrating these glass filaments. The obtained glass strand is chopped into predetermined lengths and used as glass chopped strands.

The method for chopping a glass strand into glass chopped strands is classified into a direct method and an indirect method. The direct method is a method in which a plurality of glass filaments are integrated into a glass strand using a sizing agent and the glass strand is directly chopped and dried.

On the other hand, the indirect method is a method including: a fiber forming step of integrating and paralleling a plurality of glass filaments using a sizing agent and winding the glass filaments in an integrated and paralleled state around a production paper tube to produce a filament-wound structure; a drying step of drying the filament-wound structure to dry the sizing agent, thus forming a coating; and a processing step of chopping a glass strand while unwinding it from the dried filament-wound structure to produce glass chopped strands.

The coating has the function of preventing the surfaces of glass filaments formed in the fiber forming step from being scratched, the function of preventing the glass strand from fuzzing and breaking in the processing step, and the function of giving the glass strand integrity to improve workability during molding of GRC and strength properties.

JP 2002 60251 A below discloses, as an example of a sizing agent forming such a coating as above, a sizing agent containing ethylene-vinyl acetate copolymer resin having an ethylene content of 5% by mass or more. Furthermore, JP 2014 534147 A below discloses a sizing agent containing: a silane coupling agent; a polyurethane coating former containing a blocked isocyanate; and water.

JP 2014 534147 A relates to a sizing composition for reinforcing glass fiber strands, which comprises a silane coupling agent, a polyurethane film-forming agent including a blocked isocyanate and water. JP 2002 053346 A discloses a glass chopped strand comprising alkali-proof glass fibers, wherein the glass chopped strand contains 14 mass% or more ZrO₂ and 10 mass% or more alkali metal oxide and the surface of the strand has been treated with a sizing agent containing a polyalkylene oxide having 3% or less urethane bonds in its molecular chain and having a molecular weight of 1000 or more.

### Summary of Invention

### Technical Problem

However, the sizing agent in JP 2002 60251 A has poor glass strand integrity. If the glass strand integrity is poor, the glass strands may split or break during mixing of the glass strands and mortar, so that the dispersion of the glass strands in the mortar becomes heterogeneous. In this case, a homogeneous product cannot be produced, so that the strength properties of GRC cannot sufficiently be increased. In addition, the fluidity of the mortar during molding of GRC may decrease to reduce workability.

On the other hand, in the case of producing glass strands by the indirect method using the sizing agent described in JP 2014 534147 A, an alkali may be eluted off from glass fibers and mixed into the sizing agent in the drying step. If an alkali is mixed in the sizing agent, the functions of the sizing agent are impaired, so that the glass strand integrity may decrease or the glass strand may become difficult to unwind from the filament-wound structure. Note that JP 2014 534147 A merely describes the production method based on the direct method and does not describe any production method based on the indirect method.

An object of the present invention is to provide a glass strand that, when mixed with mortar, is less likely to decrease the fluidity of the mortar and can effectively increase the mechanical strength of a cementitious material, a glass roving using the same, and a method for manufacturing the glass roving. Solution to Problem

The present invention provides a glass strand according to claim 1. A glass strand according to the present invention is a glass strand including: a plurality of glass filaments containing, in % by mass, 54 to 65% SiO₂, 12 to 25% ZrO₂, 0 to 5% Li₂O, 10 to 17% Na₂O, 0 to 8% K₂O, 0 to 10% R'O (where R' represents Mg, Ca, Sr, Ba or Zn), 0 to 7% TiO₂, and 0 to 2% Al₂O₃; and a coating covering surfaces of the glass filaments, wherein the coating contains polyvinyl acetate resin and polyether-based urethane resin, wherein a content of the polyether-based urethane resin in the coating is, in solid content ratio, not less than 10% by mass and not more than 90% by mass, and an ether portion of the polyether-based urethane resin is preferably made of polytetramethylene ether glycol.

In the glass strand according to the present invention, the coating preferably further contains ethylene-vinyl acetate copolymer.

In the glass strand according to the present invention, a content of the ethylene-vinyl acetate copolymer in the coating is, in solid content ratio, preferably not less than 10% by mass and not more than 50% by mass.

In the glass strand according to the present invention, an ether portion of the polyether-based urethane resin is made of polytetramethylene ether glycol.

The glass strand according to the present invention preferably has a count of not less than 20 tex and not more than 200 tex.

The glass strand according to the present invention preferably has a length of not less than 3 mm and not more than 40 mm.

The glass strand according to the present invention is preferably used as a reinforcement material for a cementitious material. The present invention also provides a use according to claim 6.

The present invention further provides a glass roving according to claim 7. A glass roving according to the present invention is formed of the glass strand formed according to the present invention.

The present invention further provides a method according to claim 8, wherein the method is a method for manufacturing a glass roving. A method for manufacturing a glass roving according to the present invention is a method for manufacturing the glass roving formed according to the present invention and includes the steps of: cooling molten glass extruded from a nozzle to form a glass filament; applying a sizing agent to surfaces of a plurality of the glass filaments to integrate the plurality of glass filaments; winding an integrated mass obtained by integrating the plurality of glass filaments to produce a filament-wound structure; and drying the sizing agent to form a coating on the surfaces of the glass filaments.

### Advantageous Effects of Invention

The present invention enables provision of a glass strand that, when mixed with mortar, is less likely to decrease the fluidity of the mortar and can effectively increase the mechanical strength of a cementitious material.

### Brief Description of Drawings

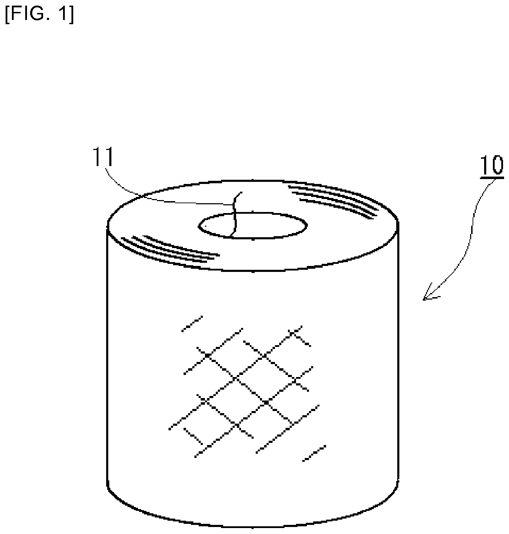

[Fig. 1] Fig. 1 is a schematic perspective view showing a glass roving according to one embodiment of the present invention. Description of Embodiments

Hereinafter, a description will be given of a preferred embodiment. However, the following embodiment is merely illustrative and the present invention is not limited to the following embodiment. Throughout the drawings, elements having substantially the same functions may be referred to by the same reference signs.

A glass strand according to the present invention includes: a plurality of glass filaments containing 12% by mass or more ZrO₂ and 10% by mass or more R₂O (where R represents at least one selected from Li, Na, and K); and a coating covering the surfaces of the glass filaments. The coating contains polyvinyl acetate resin and polyether-based urethane resin. The content of the polyether-based urethane resin in the coating is, in solid content ratio, not less than 10% by mass and not more than 90% by mass. The glass strand of the present invention fulfils additionally at the least the further features described in claim 1.

Since the glass strand according to the present invention includes glass filaments containing 12% by mass or more ZrO₂, it has excellent alkaline resistance. Therefore, when used as a reinforcement material for a cementitious material, the glass strand is less likely to be eroded by an alkaline substance in the cement. Hence, it can be prevented that the mechanical strength of the glass strand is decreased by the alkaline substance.

ZrO₂ is indeed a component that decreases meltability, but the glass strand according to the present invention is less likely to decrease meltability since it includes glass filaments containing 10% by mass or more R₂O. Note that 10% by mass or more R₂O means that the total of the contents of LiO₂, Na₂O, and K₂O in the glass filament is 10% by mass or more.

Furthermore, since the coating covering the surface of the glass strand according to the present invention is made of polyvinyl acetate resin and polyether-based urethane resin, it is less likely to react with an alkaline component eluted from the glass filaments. Therefore, the functions of the coating are less likely to be impaired by the alkali eluted from the glass filaments. Hence, the glass strand according to the present invention is less likely to decrease its integrity and is easily unwound from the filament-wound structure.

Moreover, since the content of the polyether-based urethane resin in the coating covering the surface of the glass strand according to the present invention is, in solid content ratio, not less than 10% by mass and not more than 90% by mass, the glass strand has excellent integrity. Since the glass strand according to the present invention has excellent integrity, the glass strands when mixed with mortar are less likely to cause splitting or breakage and, therefore, have excellent dispersibility. Hence, even when mixed with the mortar, the glass strands are less likely to decrease the fluidity of the mortar. In addition, the glass strands can increase the mechanical strength of the cementitious material.

Since the glass strand according to the present invention can increase the mechanical strength of the cementitious material, it can be suitably used as a reinforcement material for the cementitious material. The glass strand according to the present invention may be wound up, stored as a glass roving, and unwound for use from the glass roving when needed.

The glass strand and glass roving according to the present invention will be described below in further detail.

### (Glass Strand)

The glass strand according to the present invention is an integrated mass of a plurality of glass filaments. No particular limitation is placed on the number of glass filaments forming the glass strand, but it can be, for example, about several tens to about several hundreds. The glass filaments are integrated by applying a sizing agent to their surfaces.

The specific composition of the glass filament is, in % by mass, 54 to 65% SiO₂, 12 to 25% ZrO₂, 0 to 5% Li₂O, 10 to 17% Na₂O, 0 to 8% K₂O, 0 to 10% R'O (where R' represents Mg, Ca, Sr, Ba or Zn), 0 to 7% TiO₂, and 0 to 2% Al₂O₃, and is preferably, in % by mass, 57 to 64% SiO₂, 14 to 24% ZrO₂, 0.5 to 3% Li₂O, 11 to 15% Na₂O, 1 to 5% K₂O, 0.2 to 8% R'O (where R' represents Mg, Ca, Sr, Ba or Zn), 0.5 to 5% TiO₂, and 0 to 1% Al₂O₃.

No particular limitation is placed on the count of the glass strand, but it is preferably not less than 20 tex and not more than 200 tex. When the count of the glass strand is within the above range, the fluidity of the mortar and the mechanical strength of the cementitious material can be further increased.

If the count of the glass strand is less than 20 tex, the surface area of the glass strand becomes large, so that the fluidity of the mortar may be decreased by the friction of the glass strand with the mortar.

On the other hand, if the count of the glass strand is more than 200 tex, the surface area of the glass strand becomes small and the contact area thereof with the mortar decreases, so that the mechanical strength of the resultant cementitious material may decrease.

The glass strand according to the present invention is preferably cut and used as glass chopped strands. No particular limitation is placed on the cut length of the glass strand, but it is preferably not less than 3 mm and not more than 40 mm. If the cut length is less than 3 mm, the fluidity of the mortar is improved, but the mechanical strength of the cementitious material may not be expressed. On the other hand, if the cut length is more than 40 mm, the glass chopped strands are bulky, so that the fluidity of the mortar may be decreased.

As described previously, in the glass strand according to the present invention, the surfaces of the glass filaments are covered with a coating. The coating is formed by applying a sizing agent to the surfaces of the glass filaments and drying it.

The glass strand according to the present invention preferably has an ignition loss of 0.5 to 2.0% by mass. If the ignition loss is less than 0.5% by mass, the glass strands during kneading together with mortar may be formed into monofilaments by physical friction. Therefore, the fluidity of the mortar may be significantly decreased. On the other hand, if the ignition loss is more than 2.0% by mass, the unwindability of the glass strand when cut becomes poor, so that the glass strand may cause breakage in monofilaments. This is not preferred because the processability decreases. The ignition loss is a value measured by a method conforming to JIS R 3420 (2013).

The coating contains polyvinyl acetate resin and polyether-based urethane resin.

### (Polyvinyl Acetate Resin)

Polyvinyl acetate resin has high affinity for cementitious materials and, therefore, can increase the effect of reinforcing such a cementitious material by the addition thereof to the cementitious material. The content of polyvinyl acetate resin is, in solid content ratio, preferably not less than 10% by mass and not more than 90% by mass. If the content of polyvinyl acetate resin is too small, the effect of reinforcing the cementitious material may decrease. On the other hand, if the content of polyvinyl acetate resin is too large, the integrity of the glass strand becomes insufficient, so that the fluidity of the mortar may decrease. The above-described content of polyvinyl acetate resin is a content thereof when the amount of the coating is 100% by mass.

### (Polyether-Based Urethane Resin)

Polyether-based urethane resin provides excellent integrity and has low reactivity with alkaline components. Therefore, even if an alkaline component is eluted from the glass filaments, the glass strand is less likely to decrease integrity.

Examples of the polyether-based urethane resin that can be used include those obtained by copolymerizing any isocyanate component exemplified below and any polyol component exemplified below.

No particular limitation is placed on the kind of the isocyanate component constituting part of the above polyether-based urethane resin, but use can be made of, for example, diphenylmethane diisocyanate (MDI), dicyclohexane diisocyanate (HMDI), hexamethylene diisocyanate (HDI), toluene diisocyanate (TDI) or isophorone diisocyanate (IPDI). The preferred isocyanate components are aliphatic isocyanates, such as dicyclohexane diisocyanate (HMDI), from the viewpoint of relatively inexpensive price and less reactivity as polyurethane.

Preferably, the isocyanate component is not a blocked isocyanate. The preferred structure of the isocyanate component in the present invention is, as thus far described, a structure having excellent coating properties and, even when an alkaline component is eluted from the glass filaments, having low reactivity with the alkaline component. Therefore, a structure reacting to the dissociation temperature, such as a blocked isocyanate, is not preferred.

The polyol component constituting part of the above polyether-based urethane resin is polytetramethylene ether glycol (PTMG). With the use of polytetramethylene ether glycol (PTMG), an inexpensive and tough coating can be obtained. In addition, with the use of polytetramethylene ether glycol (PTMG), a coating having higher lubricity can be obtained, so that the lubricity of the fibers themselves can be further increased. Therefore, even when the fibers are mixed with mortar, the fluidity of GRC can be further increased by the lubricity of the fibers themselves.

The above polyether-based urethane resin is more preferably a polyether-based urethane resin produced by combining dicyclohexane diisocyanate (HMDI) as the isocyanate component with polytetramethylene ether glycol (PTMG) as the polyol component.

The content of the polyether-based urethane resin in the coating is, in solid content ratio, not less than 10% by mass and not more than 90% by mass. If the content of the polyether-based urethane resin is too small, a tough coating is less likely to be obtained. On the other hand, if the content of the polyether-based urethane resin is too large, the glass strand becomes difficult to chop, so that the processability may decrease.

From the viewpoint of further increasing the integrity of the glass strand to further increase the processability, the content of the polyether-based urethane resin in the coating is, in solid content ratio, more preferably not less than 50% by mass and not more than 80% by mass.

The above-described content of polyether-based urethane resin is a content thereof when the amount of the coating is 100% by mass.

### (Ethylene-Vinyl Acetate Copolymer)

The coating may further contain ethylene-vinyl acetate copolymer. Ethylene-vinyl acetate copolymer has, like polyvinyl acetate, high affinity for cementitious materials and, therefore, can further increase the effect of reinforcing such a cementitious material by the addition thereof to the cementitious material. In addition, since ethylene-vinyl acetate copolymer contains ethylene, a highly tough coating can be obtained, so that the integrity of the glass strand can be further increased. However, if its content is too large, the unwindability of the glass strand when unwound may become poor.

From the viewpoint of further increasing the toughness of the coating and affinity for cementitious materials, the content of ethylene-vinyl acetate copolymer is, in solid content ratio, preferably not less than 3% by mass and not more than 50% by mass, and more preferably not less than 10% by mass and not more than 30% by mass.

The above-described content of ethylene-vinyl acetate copolymer is a content thereof when the amount of the coating is 100% by mass.

### (Glass Roving)

Fig. 1 is a schematic perspective view showing a glass roving according to one embodiment of the present invention. As shown in Fig. 1, a glass roving 10 has a cylindrical structure in which a glass strand 11 is wound layer upon layer. The glass strand 11 is the above-described glass strand formed according to the present invention. Therefore, the glass roving according to the present invention is formed of the above-described glass strand formed according to the present invention.

No particular limitation is placed on the method for manufacturing the glass roving according to the present invention and the glass roving can be formed, for example, by the following method.

First, a glass raw material put into a glass melting furnace is melted to form molten glass and the molten glass is made homogeneous and then extruded from thermally resistant nozzles attached to a bushing. Thereafter, the extruded molten glass is cooled to form glass filaments.

Next, a sizing agent described below is applied to the surfaces of the glass filaments. With the sizing agent applied uniformly to the glass filaments, several hundreds to several thousands of the glass filaments are paralleled and integrated. Although the integrated glass filaments may be directly cut by the direct method, the following indirect method is used in this manufacturing process.

In the manufacturing process based on the indirect method, the glass filaments are first integrated and paralleled using a sizing agent and, in this state, wound up around a production paper tube to produce a cake (filament-wound structure). Subsequently, the sizing agent is dried to form a coating on the surfaces of the glass filaments, thus obtaining a glass roving. Alternatively, glass strands unwound from obtained several glass rovings may be gathered in a bunch and wound up to form a glass roving.

The glass roving produced in the above manner can be stored in this form and used as necessary. Furthermore, the glass roving can be cut at once. The glass strand can be cut while being unwound from the glass roving, and can be thus used as glass chopped strands.

For the purposes of dust prevention, antifouling, protection of fiber surfaces, and so on, glass rovings each including a glass strand wound up in a coiled form are each wrapped depending on the intended use with an organic film material, for example, shrink wrapped or wrapped with stretch film, and supplied in a multiply stacked state to customers.

In the method for manufacturing a glass roving according to the present invention, even if an alkaline component is eluted from the glass filaments, the coating formed by the application of the sizing agent for use in the present invention is prevented from being impaired in its functions. Therefore, it can be prevented that the integrity of the glass strand decreases and the glass strand becomes difficult to unwind from the glass roving.

The sizing agent contains polyvinyl acetate resin and polyether-based urethane resin. The content of the polyether-based urethane resin in the sizing agent is, in solid content ratio, not less than 10% by mass and not more than 90% by mass. As the polyvinyl acetate resin and polyether-based urethane resin that form the sizing agent, the same resins as those described in the above paragraphs for the coating can be used in the same additive amounts as described in the above paragraphs for the coating. Furthermore, the sizing agent may further contain ethylene-vinyl acetate copolymer in the same additive amount as described in the above paragraphs for the coating.

The sizing agent may contain, in addition to the above components, for example, a silane coupling agent. Specific examples of the silane coupling agent that can be used include aminosilane, epoxysilane, vinylsilane, acrylic silane, chlorosilane, mercaptosilane, and ureidosilane. By the addition of the silane coupling agent, the reactivity of the glass strand surface with the sizing agent can be improved to further increase mechanical strength, such as tensile strength. The sizing agent may further contain, besides the above-described silane coupling agent, a lubricant, a non-ionic surfactant, an antistat, and/or other components, wherein the compounding ratio of each component can be determined as appropriate.

Since the sizing agent contains polyvinyl acetate resin and polyether-based urethane resin, it is less likely to react with an alkaline component eluted from the glass filaments. Therefore, while the strand is unwound from the obtained glass roving, the resistance to unwinding is less likely to become large, so that the occurrence of yarn breakage can be reduced.

The amount of sizing agent applied is preferably controlled so that the ignition loss of the glass strand is 0.5 to 2.0% by mass.

The present invention will be described below in further detail with reference to specific examples.

### (Example 1)

### (Preparation of Sizing Agent)

Polyvinyl acetate resin, polyether-based urethane resin A, an aminosilane coupling agent, and paraffin wax were homogeneously mixed to have their respective contents of 24% by mass, 75% by mass, 0.5% by mass, and 0.5% by mass in a coating formed from these components, thus preparing a sizing agent.

The polyether-based urethane resin A used was a urethane resin in which its diisocyanate component is made of HMDI and its polyol component is made of PTMG. The aminosilane coupling agent used was γ-aminopropyltriethoxysilane (Sila-Ace S330 manufactured by Chisso Corporation) . Paraffin wax was added in a certain amount in order to control the yarn quality.

### (Production of Glass Chopped Strands)

First, molten glass was extruded from a bushing having several hundreds to several thousands of nozzles to give a composition of 58.3% by mass SiO₂, 17.7% by mass ZrO₂, 0.5% by mass Li₂O, 14.3% by mass Na₂O, 2.0% by mass K₂O, 0.7% by mass CaO, and 6.5% by mass TiO₂, thus obtaining glass filaments.

Next, a previously prepared sizing agent described above was applied to the surfaces of the obtained glass filaments using an applicator after being controlled to give an ignition loss of 1.61% by mass, and these glass filaments were integrated and wound up to produce a cake.

Subsequently, the cake was dried under conditions at 130°C for 10 hours to form a glass roving and a strand was chopped into 13-mm cut length pieces while being unwound from the glass roving, thus producing glass chopped strands. The count of the glass strand was 40 tex.

### (Examples 2 to 13 and Comparative Examples 1 and 2)

Glass chopped strands were produced in the same manner as in Example 1 except that the ratio of components of the coating, the ignition loss, the strand count, and the strand cut length were set as shown in Tables 1 to 3 below. The contents of polyvinyl acetate resin, polyether-based urethane resin, and ethylene-vinyl acetate copolymer resin in Tables 1 to 3 below are contents based on solid content ratio.

In preparing the sizing agent, in Examples 5, 6, 10, 12, and 13, ethylene-vinyl acetate copolymer resin having an ethylene content of 5% by mass or 10% by mass was further added and the components were homogeneously mixed so that the components in the coating exhibit their respective values shown in Tables 1 to 3 below. In Example 11, instead of polyether-based urethane resin A, polyether-based urethane resin B was used in which its diisocyanate component was made of IPDI and its polyol component was made of PPG, and the components were homogeneously mixed so that the components in the coating exhibit their respective values shown in Table 2 below.

### (Evaluation)

The glass chopped strands obtained in Examples 1 to 13 and Comparative Examples 1 and 2 were evaluated in the following manners. The results are shown in Tables 1 to 3.

### (Tapping Flow Value)

Using the glass chopped strands obtained in each of Examples 1 to 13 and Comparative Examples 1 and 2, the fluidity of GRC mortar during molding was measured.

The fluidity of GRC mortar during molding was evaluated on its tapping flow value. The tapping flow value was measured, using GRC mortar in which 3% by mass glass chopped strands obtained in each of Examples 1 to 13 and Comparative Examples 1 and 2 were mixed into mortar produced by an Omni-mixer and containing 10 kg of cement, 5 kg of silica sand, and 4.2 kg of water, in conformity with the flow test defined in JIS R 5201.

### (Flexural Strength)

An amount of 3% by mass of glass chopped strands obtained in each of Examples 1 to 13 and Comparative Examples 1 and 2 were mixed into mortar produced by an Omni-mixer and containing 10 kg of cement, 5 kg of silica sand, and 4.2 kg of water, and kneaded with the Omni-mixer to produce GRC.

The mechanical strength of the produced GRC was evaluated on its flexural strength. The measurement of the flexural strength of GRC was made in such a manner that a GRC specimen (275 × 50 × 15 mm) four weeks after being produced was loaded at three points and underwent a test under conditions of a span of 225 mm and a test speed of 2 mm/min.

As for Examples 1 to 13, the mortars exhibited tapping flow values of 167 mm or more and therefore had sufficient fluidity. In contrast, as for Comparative Examples 1 and 2, the mortars exhibited tapping flow values of 165 mm or less and therefore had low fluidity. In addition, the mortars in Examples 1 to 13 exhibited flexural strength values of 149 MPa or more and therefore had sufficient flexural strength.

**[Table 1]**

| Sample No. | Examples | | | | | |
|---|---|---|---|---|---|---|
| | 1 | 2 | 3 | 4 | 5 | 6 |
| Coating (% by mass) | | | | | | |
| Polyvinyl acetate resin | 24 | 40 | 28 | 59 | 10 | 40 |
| Polyether-based urethane resin A | 75 | 59 | 71 | 40 | 70 | 33 |
| Ethylene-vinyl acetate copolymer resin (ethylene content: 5% by mass) | | | | | | 26 |
| Ethylene-vinyl acetate copolymer resin (ethylene content: 10% by mass) | | | | | 19 | |
| Aminosilane coupling agent | 0.5 | 0.5 | 0.5 | 0.5 | 0.5 | 0.5 |
| Paraffin wax | 0.5 | 0.5 | 0.5 | 0.5 | 0.5 | 0.5 |
| Ignition loss (% by mass) | 1.61 | 1.58 | 1.66 | 1.71 | 1.55 | 1.60 |
| Strand count (tex) | 40 | 150 | 78 | 39 | 81 | 40 |
| Cut length (mm) | 13 | 25 | 19 | 13 | 19 | 13 |
| Tapping flow value (mm) | 187 | 171 | 180 | 185 | 178 | 179 |
| Flexural strength (MPa) | 149 | 162 | 156 | 151 | 158 | 156 |

**[Table 2]**

| Sample No. | Examples | | | | | | |
|---|---|---|---|---|---|---|---|
| | 7 | 8 | 9 | 10 | 11 | 12 | 13 |
| Coating (% by mass) | | | | | | | |
| Polyvinyl acetate resin | 31 | 44 | 21 | 26 | 45 | 25 | 26 |
| Polyether-based urethane resin A | 68 | 55 | 78 | 68 | | 26 | 50 |
| Polyether-based urethane resin B | | | | | 54 | | |
| Ethylene-vinyl acetate copolymer resin (ethylene content: 5% by mass) | | | | | | | |
| Ethylene-vinyl acetate copolymer resin (ethylene content: 10% by mass) | | | | 5 | | 48 | 13 |
| Aminosilane coupling agent | 0.5 | 0. 5 | 0. 5 | 0.5 | 0. 5 | 0. 5 | 0.5 |
| Paraffin wax | 0.5 | 0. 5 | 0.5 | 0. 5 | 0.5 | 0.5 | 0.5 |
| Ignition loss (% by mass) | 1.59 | 1. 68 | 1. 61 | 1. 63 | 1. 59 | 1. 63 | 1. 53 |
| Strand count (tex) | 38 | 82 | 151 | 149 | 78 | 150 | 150 |
| Cut length (mm) | 13 | 19 | 25 | 19 | 19 | 25 | 19 |
| Tapping flow value (mm) | 181 | 183 | 174 | 182 | 168 | 167 | 185 |
| Flexural strength (MPa) | 153 | 159 | 162 | 158 | 150 | 156 | 157 |

**[Table 3]**

| Sample No. | Comparative Examples | |
|---|---|---|
| | 1 | 2 |
| Coating (% by mass) | | |
| Polyvinyl acetate resin | 99 | 94 |
| Polyether-based urethane resin A | | 5 |
| Ethylene-vinyl acetate copolymer resin (ethylene content: 5% by mass) | | |
| Aminosilane coupling agent | 0. 5 | 0. 5 |
| Paraffin wax | 0. 5 | 0. 5 |
| Ignition loss (% by mass) | 1. 62 | 1. 63 |
| Strand count (tex) | 41 | 39 |
| Cut length (mm) | 13 | 13 |
| Tapping flow value (mm) | 165 | 163 |
| Flexural strength (MPa) | 151 | 149 |

### Reference Signs List

10...glass roving
11...glass strand

## Claims

1. A glass strand (11) including: a plurality of glass filaments containing, in % by mass, 54 to 65% SiO₂, 12 to 25% ZrO₂, 0 to 5% Li₂O, 10 to 17% Na₂O, 0 to 8% K₂O, 0 to 10% R'O (where R' represents Mg, Ca, Sr, Ba or Zn), 0 to 7% TiO₂, and 0 to 2% Al₂O₃; and a coating covering surfaces of the glass filaments,
wherein the coating contains polyvinyl acetate resin and polyether-based urethane resin,
wherein a content of the polyether-based urethane resin in the coating is, in solid content ratio, not less than 10% by mass and not more than 90% by mass, and
wherein an ether portion of the polyether-based urethane resin is made of polytetramethylene ether glycol.

2. The glass strand (11) according to claim 1, wherein the coating further contains ethylene-vinyl acetate copolymer.

3. The glass strand (11) according to claim 2, wherein a content of the ethylene-vinyl acetate copolymer in the coating is, in solid content ratio, not less than 10% by mass and not more than 50% by mass.

4. The glass strand (11) according to any one of claims 1 to 3, having a count of not less than 20 tex and not more than 200 tex.

5. The glass strand (11) according to any one of claims 1 to 4, having a length of not less than 3 mm and not more than 40 mm.

6. Use of the glass strand (11) according to any one of claims 1 to 5 as a reinforcement material for a cementitious material.

7. A glass roving (10) formed of the glass strand (111) according to any one of claims 1 to 4.

8. A method for manufacturing the glass roving (10) according to claim 7, the method comprising the steps of:
cooling molten glass extruded from a nozzle to form a glass filament;
applying a sizing agent to surfaces of a plurality of the glass filaments to integrate the plurality of glass filaments;
winding an integrated mass obtained by integrating the plurality of glass filaments to produce a filament-wound structure; and
drying the sizing agent to form a coating on the surfaces of the glass filaments.

## Patentansprüche

1. Glasfaden (11), enthaltend eine Vielzahl von Glasfilamenten, die in Massenprozent 54 bis 65 % SiO₂, 12 bis 25 % ZrO₂, 0 bis 5 % Li₂O, 10 bis 17 % Na₂O, 0 bis 8 % K₂O, 0 bis 10 % R'O (wobei R' Mg, Ca, Sr, Ba oder Zn repräsentiert), 0 bis 7 % TiO₂ und 0 bis 2 % Al₂O₃ enthalten, und eine Beschichtung, welche die Oberflächen der Glasfilamente bedeckt,
wobei die Beschichtung Polyvinylacetatharz und polyetherbasiertes Urethanharz enthält,
wobei ein Gehalt des polyetherbasierten Urethanharzes in der Beschichtung in Feststoffgehaltanteil nicht weniger als 10 Massenprozent und nicht mehr als 90 Massenprozent beträgt und
wobei ein Ether-Teil des polyetherbasierten Urethanharzes aus Polytetramethylenetherglykol aufgebaut ist.

2. Glasfaden (11) nach Anspruch 1, wobei die Beschichtung ferner Ethylenvinylacetat-Copolymer enthält.

3. Glasfaden (11) nach Anspruch 2, wobei ein Gehalt an dem Ethylenvinylacetat-Copolymer in der Beschichtung in Feststoffgehaltanteil nicht weniger als 10 Massenprozent und nicht mehr als 50 Massenprozent beträgt.

4. Glasfaden (11) nach einem der Ansprüche 1 bis 3 mit einer Feinheit von nicht weniger als 20 tex und nicht mehr als 200 tex.

5. Glasfaden (11) nach einem der Ansprüche 1 bis 4 mit einer Länge von nicht weniger als 3 mm und nicht mehr als 40 mm.

6. Verwendung eines Glasfadens (11) nach einem der Ansprüche 1 bis 5 als Verstärkungsmaterial für ein zementartiges Material.

7. Glasroving (10), gebildet aus dem Glasfaden (11) nach einem der Ansprüche 1 bis 4.

8. Verfahren zur Herstellung des Glasrovings (10) nach Anspruch 7, das Verfahren umfassend die folgenden Schritte:
Kühlen geschmolzenen Glases, das aus einer Düse extrudiert wurde, um ein Glasfilament zu bilden,
Auftragen eines Schlichtemittels auf die Oberflächen einer Vielzahl der Glasfilamente, um die Vielzahl von Glasfilamenten zusammenzufassen,
Winden einer zusammengefassten Masse, die durch Zusammenfassen der Vielzahl von Glasfilamenten erhalten wurde, um eine filamentgewundene Struktur herzustellen, und
Trocknen des Schlichtemittels, um eine Beschichtung auf den Oberflächen der Glasfilamente zu bilden.

## Revendications

1. Fil de verre (11) comprenant : une pluralité de filaments de verre contenant, suivant un pourcentage en masse, de 54 % à 65 % de SiO₂, de 12 % à 25 % de ZrO₂, de 0 % à 5 % de Li₂O, de 10 % à 17 % de Na₂O, de 0 % à 8 % de K₂O, de 0 % à 10 % de R'O (où R' représente du Mg, du Ca, du Sr, du Ba ou du Zn), de 0 % à 7 % de TiO₂ et de 0 % à 2 % de Al₂O₃ ; et un revêtement couvrant des surfaces des filaments de verre,
fil de verre dans lequel le revêtement contient de la résine d'acétate de polyvinyle et de la résine d'uréthane à base de polyéther,
fil de verre dans lequel une teneur de la résine d'uréthane à base de polyéther contenue dans le revêtement est, dans un rapport de teneurs en matières solides, non inférieure à 10 % en masse et non supérieure à 90 % en masse, et
fil de verre dans lequel une partie d'éther de la résine d'uréthane à base de polyéther est composée de polytétraméthylène éther glycol.

2. Fil de verre (11) selon la revendication 1, dans lequel le revêtement contient en outre un copolymère éthylène-acétate de vinyle.

3. Fil de verre (11) selon la revendication 2, dans lequel une teneur du copolymère éthylène-acétate de vinyle contenu dans le revêtement est, dans un rapport de teneurs en matières solides, non inférieure à 10 % en masse et non supérieure à 50 % en masse.

4. Fil de verre (11) selon l'une quelconque des revendications 1 à 3, ayant un nombre non inférieur à 20 tex et non supérieur à 200 tex.

5. Fil de verre (11) selon l'une quelconque des revendications 1 à 4, ayant une longueur non inférieure à 3 mm et non supérieure à 40 mm.

6. Utilisation du fil de verre (11) selon l'une quelconque des revendications 1 à 5, ledit fil de verre étant utilisé comme matériau de renforcement pour un matériau cimentaire.

7. Stratifil de verre (10) formé par le fil de verre (11) selon l'une quelconque des revendications 1 à 4.

8. Procédé de fabrication du stratifil de verre (10) selon la revendication 7, ledit procédé comprenant les étapes consistant :
à refroidir du verre fondu, extrudé à partir d'une buse pour former un filament de verre ;
à appliquer un agent d'encollage sur des surfaces d'une pluralité des filaments de verre, afin d'intégrer la pluralité de filaments de verre ;
à enrouler une masse intégrée ayant été obtenue en intégrant la pluralité de filaments de verre, afin de produire une structure à enroulement filamentaire ; et
à sécher l'agent d'encollage afin de former un revêtement sur les surfaces des filaments de verre.
